Europäisches Patentamt

European Patent Office

Office européen des brevets

(11) Veröffentlichungsnummer: **0 318 640**
**A2**

## (12) EUROPÄISCHE PATENTANMELDUNG

(21) Anmeldenummer: **88112663.5**

(22) Anmeldetag: **04.08.88**

(51) Int. Cl.⁴: **B60R 13/02 , B60R 21/055**

(30) Priorität: **03.12.87 DE 3740938**

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **R. SCHMIDT GMBH**
**Dr. Paul-Müller-Strasse 36**
**D-5940 Lennestadt 11(DE)**

(72) Erfinder: **Müller, Olaf**
**Wiesenstrasse 62**
**D-6090 Rüsselsheim(DE)**

(74) Vertreter: **Patentanwälte Dipl.-Ing. Conrad**
**Köchling Dipl.-Ing. Conrad-Joachim Köchling**
**Fleyer Strasse 135**
**D-5800 Hagen 1(DE)**

(54) **Türverkleidung für Kraftfahrzeuge.**

(57) Um eine Türverkleidung für Kraftfahrzeuge aus einem vorgeformten plattenförmigen Faservliesstoff mit Armlehne und Weichstoffauflage, mit kostengünstigerem Faservliesstoff herstellen zu können und die Montage der Einzelteile zu vereinfachen, wird vorgeschlagen, daß die Armlehne (2) ein separates Kunststoffspritzteil aus thermoplastischem Kunststoff ist, welches einen im wesentlichen parallel an den entsprechenden Befestigungsbereich der Türverkleidung (1) anlegbaren Flansch (3) aufweist, daß der Flansch (3) mit der Türverkleidung (1) verschweißt ist, die Armlehne (2) im Übergangsbereich von Flansch (3) zu Armauflagefläche Aussparungen (4) aufweist, und die Weichstoffauflage (5) auf der der Armlehne (2) zugewandten Fläche in die Aussparungen (4) rastbar einsetzbare Vorsprünge (6) besitzt.

Fig. 1

## Türverkleidung für Kraftfahrzeuge

Die Erfindung betrifft eine Türverkleidung für Kraftfahrzeuge aus einem vorgeformten plattenförmigen Flaservliesstoff mit Armlehne und Weichstoffauflage.

Überlicherweise werden derartige Türverkleidungen aus vorgeformtem Faservliesstoff hergestellt, wobei die Armauflage einstückig angeformt und mit einem aufgeklebten Schaumteil versehen ist. Die hierzu erforderliche Verformung des die Türverkleidung samt Armlehne bildenden Grundkörpers stellt hohe Anforderungen an den Faservliesstoff dar. Das Aufkleben der Formschaumteile ist sehr zeitintensiv.

Hiervon ausgehend liegt der Erfindung die Aufgabe zugrunde, derartige Türverkleidungen mit kostengünstigerem Faservliesstoff herstellen zu können und die Montage der Einzelteile zu vereinfachen.

Zur Lösung dieser Aufgabe schlägt die Erfindung vor, daß die Armlehne ein separates Kunststoffspritzteil aus thermoplastischem Kunststoff ist, welches einen im wesentlichen parallel an den entsprechenden Befestigungsbereich der Türverkleidung anlegbaren Flansch aufweist, und der Flansch mit der Türverkleidung verschweißt ist.

Vorteilhafter Weise ist vorgesehen, daß die Armlehne im Übergangsbereich von Flansch zu Armauflagefläche Aussparungen aufweist, und die Weichstoffauflage auf der der Armlehne zugewandten Fläche in die Aussparungen rastbar einsetzbare Vorsprünge besitzt.

Aufgrund der Ausbildung der Armlehne als separates Kunststoffspritzteil ist es möglich, für die Türverkleidung selbst einfache und billige Faservliesstoffe zu verwenden, wie beispielsweise aus gebundenen Holzfasern bestehende Faservlieswerkstoffe. Die Verkleidung ist im wesentlichen ebenflächig mit geringfügigen Verkröpfungen, Abkantungen oder dergleichen auszubilden, was mit der geeigneten preisgünstigen Werkstoffauswahl ohne weiteres möglich ist. Die Armlehne selbst ist aus thermoplastischem Kunststoff gespritzt, was ebenfalls sehr einfach zu bewerkstelligen ist. Die Verbindung von Armlehne und Türverkleidung erfolgt im Wege des Schweißverfahrens, wobei die Weichstoffauflage in die entsprechenden Aussparungen der Armlehne eingeknöpft werden kann.

Bevorzugt ist vorgesehen, daß die Armlehne als Halbschale mit umlaufenden, nach relativ außen abragendem Flansch ausgebildet ist.

Auf diese Weise ist eine relativ große Schweißverbindungsfläche zur Verfügung gestellt, die die notwendigen Lasten während der zweckgemäßen Benutzung zu vermitteln vermag.

Desweiteren ist vorteilhaft, wenn die Türverkleidung mindestens im Bereich der Armlehne eine Verkröpfung aufweist und die konturmäßig angepaßte Anlagefläche der Armlehne mit ebenfalls einer Verkröpfung an dieser abgestützt ist.

Dabei soll die Verkröpfung möglichst in Richtung der Längserstreckung der Armlehne angeordnet sein, damit bei der Auflage eines Armes des Benutzers eine zusätzliche Abstützung an den Verkröpfungen erfolgt und somit ein dauerhafter Sitz der Armlehne noch weitergehend gewährleistet ist.

Bevorzugt ist vorgesehen, daß der Flansch mit der Türverkleidung reibverschweißt ist. Desweiteren ist in an sich bekannter Weise vorgesehen, daß die Türverkleidung samt Armlehne und Weichstoffauflage mit Bezugsmaterial kaschiert ist.

Zusätzlich wird vorgeschlagen, daß die Weichstoffauflage aus Kunststoff-Weichschaum, insbesondere PUR-Weichschaum besteht, schalenförmig, der Kontur der Armlehne entsprechend geformt ist und einen den Flansch der Armlehne abdeckenden angeformten Flansch aufweist.

Eine bevorzugte Variante besteht darin, daß die Armauflagefläche der Armlehne eine Vielzahl von nahe nebeneinander liegenden Schlitzen aufweist.

Dadurch, daß die Auflagefläche geschlitzt ist, entstehen einzelne Federn des Kunststoffteiles, wodurch quasi eine weiche Auflage erzeugt ist.

Bevorzugt kann dabei vorgesehen sein, daß oberhalb der Schlitze eine Weichschaumauflage angeordnet ist.

Beispielsweise kann hierzu in der Armauflage zur Glättung der Federstege ein passendes Stück Kaschierfolie aus dem üblichen Abfall auf die Stege aufgelegt werden, damit sich deren Ränder nicht abzeichnen können.

Dabei wird die Weichschaumseite nach oben verlegt, damit die harte Oberschicht auf den Stegen zum Liegen kommt, wodurch einem vorzeitigem Verschleiß vorgebeugt wird.

Eine bevorzugte Weiterbildung wird noch darin gesehen, daß bei schalenförmiger Armlehne deren Seitenfläche mit einer Vielzahl von Schlitzen versehen ist.

Durch die seitlichen Schlitze wird eine Verbesserung des Seitencrashverhaltens erreicht.

Das Schlitzen des Grundkörpers ist vorteilhaft auch bei allen anderen Verkleidungsteilen anwendbar.

Ein Ausführungsbeispiel der Erfindung ist in der Zeichnung dargestellt und im folgenden näher beschrieben.

Es zeigt:

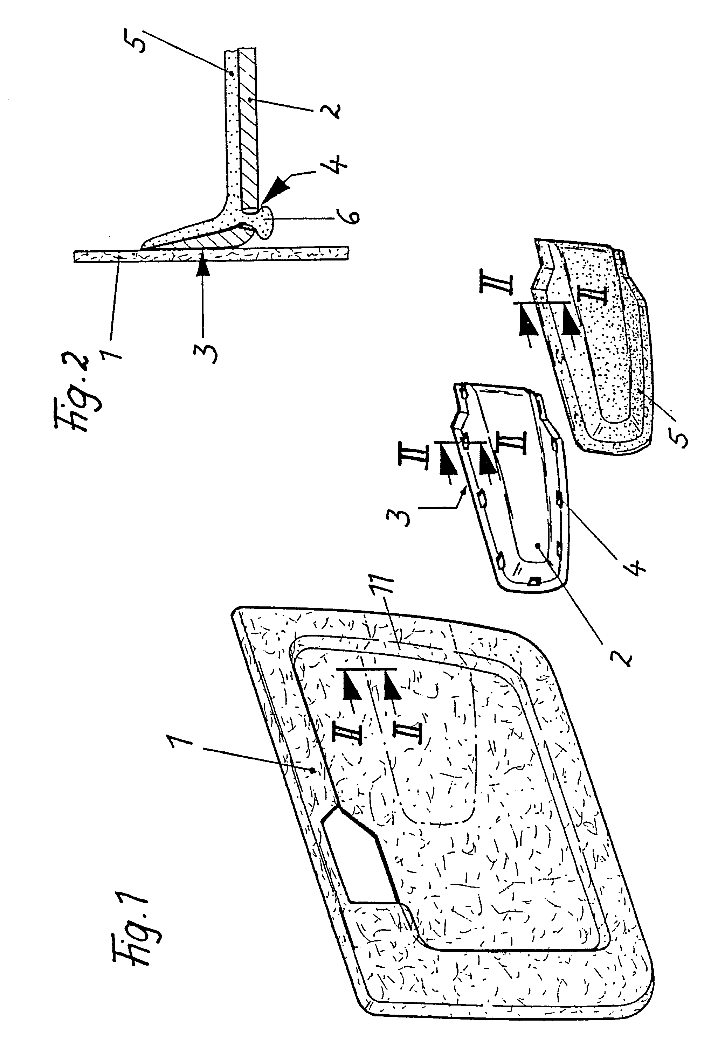

Fig. 1 die Einzelteile der Türverkleidung vor dem Zusammenbau;

Fig. 2 desgleichen im Schnitt II-II nach dem Zusammenbau;

Fig. 3 + 4 eine Variante in den Ansichten gemäß

Fig. 1 und 2;

Fig. 5 bis 8 Varianten von Verkleidungsteilen in Ansicht.

Die Türverkleidung 1 ist aus Faservlies, beispielsweise aus gebundenen Holzfasern geformt, wobei die Türverkleidung 1 nur eine geringe Verformung aufweist, insbesondere einen Verkröpfungsbereich 11, durch den eine relativ innenliegend vertiefte Fläche und ein außen umlaufender, relativ vorstehender Randteil erzeugt wird.

Die Armlehne 2 ist ein thermoplastisches Kunststoffspritzteil in Form einer Halbschale, die einen außen umlaufenden Flanschrand 3 aufweist. Im Übergangsbereich zwischen der Seitenfläche der Armlehne 2 und dem Flanschrand 3 sind Aussparungen 4 vorgesehen. Desweiteren ist eine Weichschaumauflage 5 aus Polyurethan-Weichschaum geformt, deren Kontur der Kontur der Armlehne 2 samt Flanschrand 3 angepaßt ist, so daß in der Einbaulage die Armlehne 2 vollständig von der Auflage 5 abgedeckt ist, wie insbesondere aus Figur 2 ersichtlich.

Auf der der Armlehne 2 zugewandten Fläche der Auflage 5 sind Vorsprünge 6 angeformt, die in die entsprechenden Ausnehmungen 4 einsetzbar sind und als Anker dienen. Auch dies ist insbesondere aus Figur 2 deutlich ersichtlich.

Die Herstellung der Teile 1, 2 und 5 erfolgt jeweils einzeln. Danach wird die Weichstoffauflage 5 an die Armlehne 2 angeknüpft und nachfolgend die Armlehne 2 auf die als Holzfaserplatte ausgebildete Türverkleidung 1 im Wege des Reibschweißens aufgeschweißt. Die Einzelteile sind damit einfach herstellbar und sehr einfach zu der fertigen Einheit zu verbinden, wobei anschließend die komplette Verkleidung mit Stoff und/oder Folie kaschiert wird. Um die im Lastfall an der Armlehne angreifenden Kräfte noch besser übertragen zu können, ohne daß der Verbund aufgelöst werden kann, ist die Abkröpfung 11 sowie eine entsprechende Abkröpfung an der Armlehne 2 vorgesehen, so daß sich die Armlehne daran formschließend abstützen kann.

In der Zeichnungsfigur 3 und 4 ist eine Ausführungsvariante dargestellt. Dabei ist die Armauflagefläche der Armlehne 2 durch eine Vielzahl von nahe nebeneinander liegenden parallel zueinander gerichteten Schlitzen gebildet, die hierdurch gebildeten Stege erzeugen durch ihre Federwirkung nach dem Kaschieren das Gefühl einer weichen Auflage.

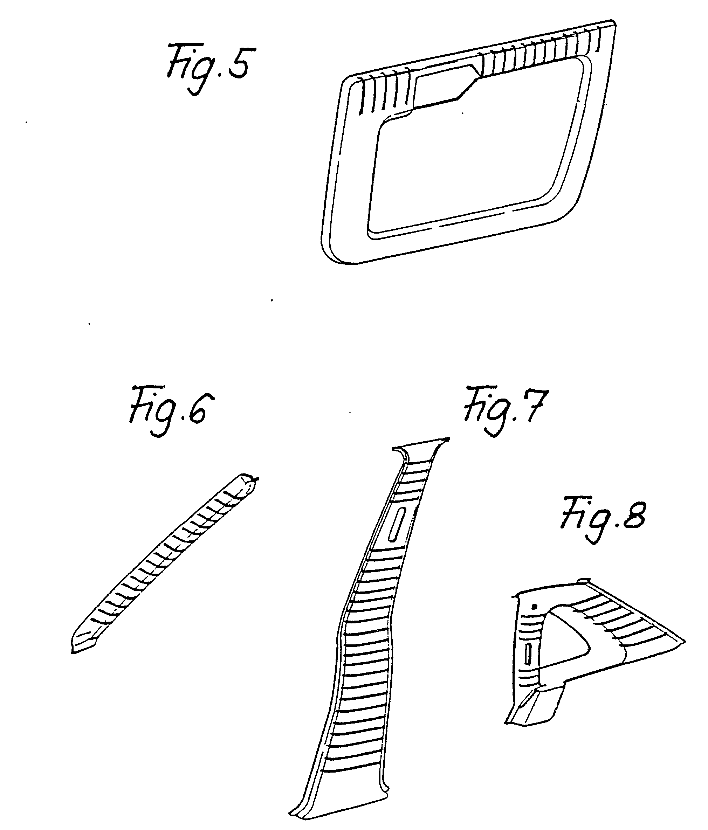

Da sich aber die durch Schlitzung entstandenen Stege beim Eindrücken geringfügig abzeichnen können, wird ein Stück Abfallkaschierfolie als Weichschaumauflage 5 darüber gelegt, wobei als Verliersicherung die Weichschaumlage 5 in einen Schlitz und eine Einprägung gelegt wird, wie dies aus Figur 4 ersichtlich ist. Desweiteren ist die Armauflage auch im seitlichen Bereich geschlitzt, so daß bei einem Seitenaufprall sich die Armlehne 2 unter gezielter geringer Krafteinwirkung zusammenfalten kann.

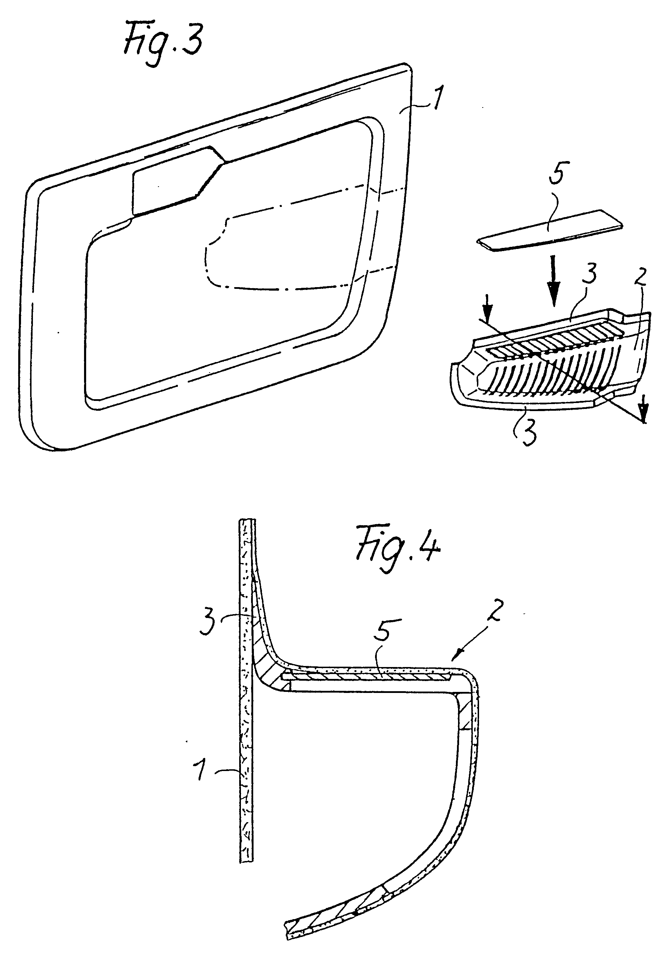

Auch bei der Ausführungsform nach Figur 3 und 4 wird die Einheit, wie aus Figur 4 ersichtlich, anschließend mit Folie oder Stoff kaschiert.

Bei den Varianten nach Figur 5 bis 8 sind Verkleidungen von Tür und Seitenholmen (vorn, mittig, hinten) mit Schlitzen versehen, um eine Federung und ein gezieltes Zusammenfalten bei Seitenaufprall zu ermöglichen.

Die Erfindung ist nicht auf das Ausführungsbeispiel beschränkt, sondern im Rahmen der Offenbarung vielfach variabel.

## Ansprüche

1. Türverkleidung für Kraftfahrzeuge aus einem vorgeformten plattenförmigen Faservliesstoff mit Armlehne und gegebenenfalls Weichstoffauflage, **dadurch gekennzeichnet, daß** die Armlehne (2) ein separates Kunststoffspritzteil aus thermoplastischem Kunststoff ist, welches einen im wesentlichen parallel an den entsprechenden Befestigungsbereich der Türverkleidung (1) anlegbaren Flansch (3) aufweist und der Flansch (3) mit der Türverkleidung (1) verschweißt ist.

2. Türverkleidung nach Anspruch 1, dadurch gekennzeichnet, daß die Armlehne (2) im Übergangsbereich von Flansch (3) zu Armauflagefläche Aussparungen (4) aufweist, und die Weichstoffauflage (5) auf der der Armlehne (2) zugewandten Fläche in die Aussparungen (4) rastbar einsetzbare Vorsprünge (6) besitzt.

3. Türverkleidung nach Anspruch 1 oder 2, dadurch gekennzeichnet, daß die Armlehne (2) als Halbschale mit umlaufenden nach relativ außen abragendem Flansch (3) ausgebildet ist.

4. Türverkleidung nach einem der Ansprüche 1 bis 3, **dadurch gekennzeichnet, daß** die Türverkleidung (1) mindestens im Bereich der Armlehne (2) eine Verkröpfung (11) aufweist und die konturmäßig angepaßte Anlagefläche der Armlehne (2) mit ebenfalls einer Verkröpfung an dieser abgestützt ist.

5. Türverkleidung nach einem der Ansprüche 1 bis 4, **dadurch gekennzeichnet, daß** der Flansch (3) mit der Türverkleidung (1) reibverschweißt ist.

6. Türverkleidung nach einem der Ansprüche 1 bis 5, **dadurch gekennzeichnet, daß** die Türverkleidung (1) samt Armlehne (2) und Weichstoffauflage (5) mit Bezugsmaterial kaschiert ist.

7. Türverkleidung nach einem der Ansprüche 1 bis 6, **dadurch gekennzeichnet, daß** die Weichstoffauflage (5) aus Kunststoff-Weichschaum, insbesondere PUR-Weichschaum besteht, schalenförmig, der Kontur der Armlehne (2) entsprechend geformt ist und einen den Flansch (3) der Armlehne (2) abdeckenden angeformten Flansch aufweist.

8. Türverkleidung nach einem der Ansprüche 1 bis 7, **dadurch gekennzeichnet, daß** die Armauflagefläche der Armlehne (2) eine Vielzahl von nahe nebeneinander liegenden Schlitzen aufweist.

9. Türverkleidung nach Anspruch 8, **dadurch gekennzeichnet, daß** oberhalb der Schlitze eine Weichschaumauflage angeordnet ist.

10. Türverkleidung nach einem der Ansprüche 1 bis 9, **dadurch gekennzeichnet, daß** bei schalenförmiger Armlehne (2) deren Seitenfläche mit einer Vielzahl von Schlitzen versehen ist.

Fig.1

Fig.2

EP 0 318 640 A2

Fig. 3

Fig. 4

Fig.5

Fig.6

Fig.7

Fig.8